# NEUE EUROPÄISCHE PATENTSCHRIFT

(11) **EP 1 690 438 B2**
(45) Veröffentlichungstag und Bekanntmachung des Hinweises auf die Entscheidung über den Einspruch: **07.03.2012**
(45) Hinweis auf die Patenterteilung: 29.07.2009
(21) Anmeldenummer: 04802803.9
(22) Anmeldetag: 24.11.2004
(51) Int. Cl.: H05B 3/84

(54) **BEHEIZBARE GLASSCHEIBE**
HEATED WINDOW PANE
VITRE CHAUFFANTE

(30) Priorität: 01.12.2003 DE 10356607
(43) Veröffentlichungstag der Anmeldung: 16.08.2006
(73) Patentinhaber: Bäumler, Peter, 52066 Aachen (DE)
(72) Erfinder: Bäumler, Peter, 52066 Aachen (DE)
(74) Vertreter: Naeven, Ralf
(86) Internationale Anmeldenummer: PCT/DE2004/002594
(87) Internationale Veröffentlichungsnummer: WO 2005/055667

(56) Entgegenhaltungen:
- DE-A- 10 126 869

## Beschreibung

Die Erfindung betrifft eine beheizbare Glasscheibe, umfassend zwei in ihrer Längsrichtung im Wesentlichen parallel zueinander und zu einer Basiskante der beheizbaren Glasscheibe angeordnete Kontaktsammelschienen unterschiedlicher Polarität sowie eine Schar die Kontaktsammelschienen elektrisch kontaktierender Heizdrähte.

Eine solche Glasscheibe ist aus der DE 101 26 869 A1 bekannt. Dort ist eine elektrisch beheizbare Scheibe offenbart, bei der die zueinander parallelen Kontaktsammelschienen in unterschiedlichen Abständen zu der Basiskante und somit quer zu ihrer Längsrichtung gesehen übereinander angeordnet sind. Der Heizdraht wird ausgehend von der oberen Kontaktsammelschiene in mehreren Schleifen und anschließend über die obere Kontaktsammelschiene hinweg zur unteren Kontaktsammelschiene geführt, wobei der Heizdraht am Kreuzungspunkt mit der oberen Kontaktsammelschiene zu dieser elektrisch isoliert ist. Die Anordnung beider Kontaktsammelschienen an derselben Scheibenkante ist insbesondere vorteilhaft für Seitenscheiben von Kraftfahrzeugen, da eine Kontaktsammelschiene an jeder anderen Kante optisch störend wäre. Außerdem liegt die Basiskante innerhalb eines Türrahmens was die Stromzuführung erleichtert, insbesondere bei bereits vorhandenem Scheibenhubmotor. Es ist des Weiteren offenbart, im Bereich einer Abschrägung der Seitenscheibe, also dort wo die Scheibe noch nicht ihre maximale Höhenausdehnung erreicht hat, den Heizdraht in einer größeren Anzahl von Schleifen (z. B. mit fünf Richtungswechseln) als im Bereich der größten Scheibenhöhe (z. B. drei Richtungswechsel) zu führen. Hierdurch soll erreicht werden, dass die Längen der verlegten Heizdrähte möglichst gleich sind, um übereinstimmende Widerstandswerte zu erreichen. Bei der beschriebenen Art und Weise der Verlegung der Heizdrähte ist es jedoch nachteilig, dass nur eine sehr grobe Variation der Heizdrahtlänge möglich ist. Erreicht man mit dem Heizdraht den Bereich der Kontaktsammelschienen, bleibt die Entscheidung, zu kontaktieren oder nochmals zwei Richtungswechsel durchzuführen, die dann eine Zunahme der Heizdrahtlängen um nahezu zwei komplette Höhen der Scheibe an dieser Stelle bedeutet. Auf diese Weise kann kaum erreicht werden, dass die Heizdrahtlängen tatsächlich weitgehend exakt gleich sind. Zudem ist es technisch aufwändig, den Heizdraht mit einer Isolierung über die obere Kontaktsammelschiene zur unteren Kontaktsammelschiene zu führen.

Aus der DE 296 06 071 U1 ist eine beheizbare Glasscheibe bekannt, bei der lediglich im Bereich der Scheibenwischerruhestellung in einer thermoplastischen Zwischenschicht eingebettete parallel geschaltete elektrische Heizdrähte vorgesehen sind. Dabei sind Kontaktsammelschienen offenbart, die auf der Scheibe lediglich relativ geringe Abmessungen aufweisen und daher auch nur eine entsprechend beschränkte Anzahl von Heizdrähten zur Kontaktierung zulassen. Die Heizdrähte sind in jeweils einer Schleife geführt, wobei die in der äußersten Schleife geführten Heizdrähte wesentlich länger sind, als die innersten. Die beschränkte Ausdehnung der Kontaktsammelschienen und damit die beschränkte Anzahl der verwendbaren Heizdrähte erlaubt ein sinnvolles Heizfeld lediglich in einem unteren Teilbereich der Glasscheibe.

Es ist nun Aufgabe der vorliegenden Erfindung, eine beheizbare Glasscheibe der eingangs genannten Art zur Verfügung zu stellen, mit der in verbesserter Weise eine effektive Beheizung mit weitgehend gleichmäßiger Heizleistungsdichte auf der gesamten Fensterfläche mittels Heizdrähten auch bei Anordnung der Kontaktsammelschienen allein an der Basiskante der Scheibe möglich ist.

Diese Aufgabe wird bei einer Glasscheibe der eingangs genannten Art durch eine Glasscheibe mit den Merkmalen des Anspruchs 1 gelöst.

Die Anordnung der Kontaktsammelschiene in einer Linie bewirkt, dass Kreuzungspunkte zwischen dem Heizdraht und den Kontaktsammelschienen vermieden werden. Mit übereinstimmenden Heizdrahtlängen kann eine gleichmäßige Verteilung der Heizenergie auf der Glasscheibenfläche erreicht werden.

Die erfindungsgemäße Glasscheibe ist auch so ausgebildet, dass die Heizdrähte ohne Kreuzungspunkte zueinander verlegt sind, wobei einer der Heizdrähte als äußerster Heizdraht die Kontaktsammelschienen an ihren einander abgewandten äußeren Enden kontaktiert. Zumindest jeder innere Heizdraht kann zum Erreichen gleicher Heizdrahtlängen mit mindestens einer Kompensationsschleife verlegt sein. Die Kompensationsschleifen können ohne weiteres so dimensioniert werden, dass die Länge des zugehörigen Heizdrahtes genau der Länge des nächstäußeren Heizdrahtes entspricht.

Es kann dabei auch sinnvoll sein, dass der äußerste Heizdraht mit einer Kompensationsschleife verlegt ist. So könnte eine ohne Kompensationsschleife nicht verlegbare Länge des äußersten Heizdrahtes zum Erreichen eines bestimmten Widerstandswertes erforderlich sein. Des Weiteren bringt die Kompensationsschleife im äußersten Heizdraht eine weitere Variationsmöglichkeit mit sich, die das vollständige und gleichmäßige Auslegen der Glasscheibe mit Heizdrähten gleicher Länge erleichtert.

Es kann vorteilhaft sein, die erfindungsgemäße Glasscheibe so auszubilden, dass die Kompensationsschleifen durch mindestens zwei Richtungswechsel in der Verlegerichtung erzeugt sind, wobei die Heizdrähte nach jedem Richtungswechsel im Wesentlichen entgegengesetzt parallel zur Verlegerichtung vor dem Richtungswechsel verlaufen.

Weiterhin kann die erfindungsgemäße Glasscheibe so ausgebildet sein, dass die Heizdrähte zwischen den Richtungswechseln gerade verlaufende Verlegstrecken aufweisen, die im Wesentlichen parallel zu einer an die Basiskante angrenzenden Seitenkante sind.

Alternativ können die Kompensationsschleifen aber auch parallel zu der der Basiskante gegenüberliegenden oberen Kante ausgerichtet sein. Bei gekrümmter oberer Kante würden die zwischen den Richtungswechseln verlaufenden Verlegstrecken entsprechend gekrümmt sein. In diesem Fall kann der erste Richtungswechsel für die Kompensationsschleife des äußersten Heizdrahtes unmittelbar vor der angrenzenden Seitenkante angeordnet werden.

Es kann aber auch vorteilhaft sein, die erfindungsgemäße Glasscheibe so auszubilden, dass zumindest ein Teilstück zumindest eines der Heizdrähte gewellt abgelegt ist. Eine Wellung des Heizdrahtes eröffnet eine zusätzliche Variationsmöglichkeit zum Erreichen vorgegebener Längen des zu verlegenden Heizdrahtes.

Im Falle gewellt abgelegter Heizdrähte ist in den Ansprüchen und der Beschreibung mit dem Begriff "Verlegerichtung" eine makroskopische Hauptverlegerichtung gemeint, die durch die die Nulldurchgänge der Heizdrahtwelle verbindende Mittellinie gegeben ist.

Die erfindungsgemäße Glasscheibe kann auch derart ausgebildet sein, dass zumindest einer der inneren Heizdrähte zumindest in Teilbereichen seiner Wegstrecke eine größere Amplitude der Heizdrahtwelle aufweist, als der nächstäußere Heizdraht. Bei Verwendung einer größeren Amplitude sollte die Wellenlänge der Heizdrahtwelle in der Regel konstant gehalten werden, um eine gleichmäßige Verlegdichte zu erhalten.

Mit größerer Amplitude muss auch der Abstand zwischen den Mittellinien parallel zueinander verlaufender Strecken benachbarter Heizdrähte größer werden, um einen für eine gleichmäßige Verteilung der Heizleistung zu geringen Abstand zwischen benachbarten Heizdrähten zu vermeiden.

Eine Möglichkeit zur Variation der Wellenamplitude ist in der deutschen Patentanmeldung 103 10 088.1 dargelegt, deren vollständige Offenbarung hiermit einbezogen wird.

Die erfindungsgemäße Glasscheibe kann auch so ausgebildet sein, dass die Heizdrähte ohne Kreuzungspunkte zueinander geführt sind, indem ein erster der Heizdrähte als äußerster Heizdraht an den einander abgewandten äußeren Enden der Kontaktsammelschienen angeschlossen ist und jeder innere Heizdraht zum Erreichen gleicher Heizdrahtlängen zumindest in Teilbereichen seiner Wegstrecke gegenüber dem nächstäußeren Heizdraht eine größere Amplitude der Heizdrahtwelle aufweist. In diesem Fall erfolgt die Anpassung der Heizdrahtlängen allein über die unterschiedlichen Amplituden der Heizdrähte.

Schließlich kann es vorteilhaft sein, die erfindungsgemäße Glasscheibe so auszubilden, dass die heizbare Glasscheibe elektrisch an eine Heizscheibensteuerung angeschlossen ist, die mindestens zwei Heizstufen mit unterschiedlichen Heizleistungen aufweist. Mit zwei Heizleistungsstufen kann auf unterschiedliche Anforderungen angemessen reagiert werden. Ist die Scheibe lediglich beschlagen, kann es genügen, mit einer geringeren Heizleistung die Glasscheibe von Kondenswasser zu befreien und dauerhaft freizuhalten. Die geringe Leistung belastet in entsprechend geringerem Maße die Energiequelle, z. B. eine Autobatterie. Werden höhere Heizleistungen benötigt, z. B. bei einer vereisten Glasscheibe, ist zur Schonung der Autobatterie darauf zu achten, dass die Heizleistung entsprechend zeitlich beschränkt wird.

Im Folgenden wird anhand zweier Figuren eine vorteilhafte Ausbildungsform der erfindungsgemäßen Glasscheibe dargestellt.

Es zeigt schematisch
- Fig. 1:: eine mit Heizdrähten belegte Fahrzeugseitenscheibe und
- Fig. 2:: einen vergrößerten Ausschnitt der Seitenscheibe gemäß Fig. 1.

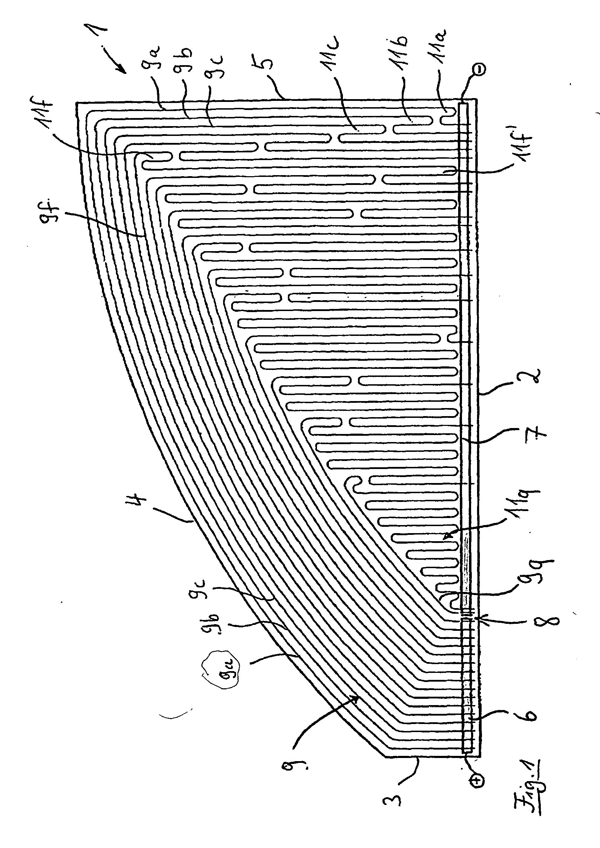

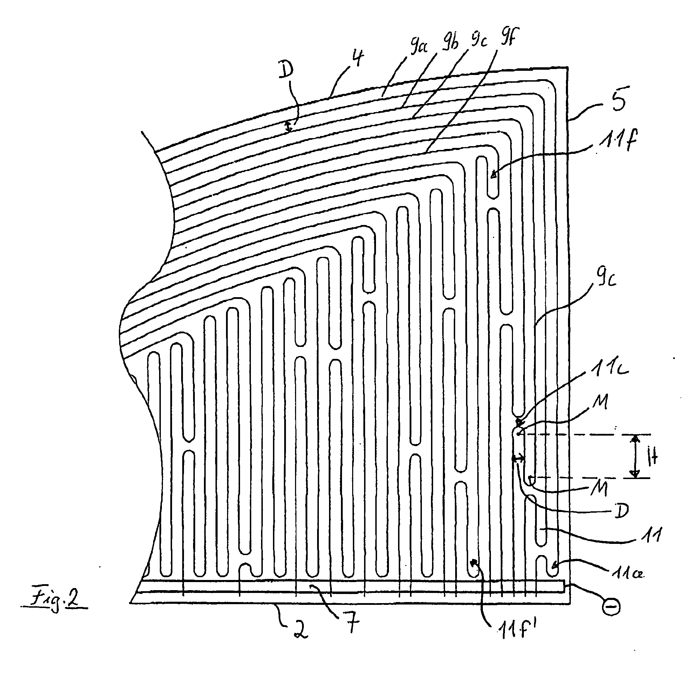

Fig. 1 zeigt eine Fahrzeugseitenscheibe 1 mit einer Basiskante 2, einer vorderen Seitenkante 3, einer schräg verlaufenden oberen Kante 4 und einer hinteren Seitenkante 5. Die Fahrzeugseitenscheibe 1 ist in Fig. 2 im Bereich der hinteren Seitenkante 5 vergrößert dargestellt.

Es handelt sich um eine Verbundglasscheibe mit einer hier nicht sichtbaren Kunststofffolie zwischen zwei Scheibenelementen. Auf der Kunststofffolie sind Kontaktsammelschienen 6, 7 und eine Schar von Heizdrähten 9 aufgebracht worden.

Entlang der unteren Basiskante 2 sind die für den Anschluss an den Pluspol einer Gleichspannungsquelle anzuschließende Kontaktsammelschiene 6 sowie die an den Minuspol der nicht dargestellten Gleichspannungsquelle anzuschließende Kontaktsammelschiene 7 angeordnet, die durch einen Spalt 8 voneinander getrennt sind.

An das der vorderen Seitenkante 3 zugewandte Ende der Kontaktsammelschiene 6 ist ein äußerster Heizdraht 9a elektrisch kontaktiert, der entlang der vorderen Seitenkante 3, der oberen Kante 4 und der hinteren Seitenkante 5 bis zu dem der hinteren Seitenkante 5 zugewandten äußeren Ende der Kontaktsammelschiene 7 geführt und mit dieser elektrisch kontaktiert ist. Neben dem äußersten Heizdraht 9a ist in einem bestimmten Abstand D, der je nach verwendeter Heizdrahtart und gewünschter Heizleistungsdichte zwischen etwa 0,5 mm und 6 mm betragen kann, der zweitäußerste Heizdraht 9b an die Kontaktsammelschiene 6 kontaktiert und mit dem Abstand D weitgehend parallel zum äußersten Heizdraht 9 zur Kontaktsammelschiene 7 geführt. Die Figuren 1 und 2 sind nicht maßstabsgerecht. Für eine verständliche Darstellung der Erfindung wurde in den Figuren insbesondere ein im Verhältnis zur Glasscheibe 1 zu großer Abstand D zwischen den Heizdrähten 9 gewählt. Damit jeder Heizdraht 9 weitgehend den gleichen elektrischen Widerstand aufweist, sollen die Heizdrähte 9 in ihren Längen übereinstimmen. Um dies zu erreichen, ist für jeden Heizdraht 9 jeweils zumindest eine Kompensationsschleife 11 in der Wegstrecke vorgesehen.

Um die gesamte Glasscheibe 1 vollständig mit einer gleichmäßigen Heizdrahtdichte versehen zu können, sind die Länge der Heizdrähte 9 und der Abstand D zwischen den Heizdrähten 9 aufeinander abzustimmen, wobei die gewünschte Heizleistung, der Drahtquerschnitt und das Drahtmaterial zu berücksichtigen sind. Zum Erreichen der optimalen Heizdrahtlänge ist auch im äußersten Heizdraht 9a eine Kompensationsschleife 11a vorgesehen. Die Kompensationsschleife 11a weist zwei Richtungswechsel auf, wobei nach jedem Richtungswechsel der Heizdraht 9a im Wesentlichen entgegengesetzt parallel zur Verlegerichtung vor dem Richtungswechsel verläuft.

Der zweitäußerste Heizdraht 9b weist ebenfalls eine Kompensationsschleife 11 b auf, deren erster Richtungswechsel sich in Fig. 1 und 2 genau oberhalb des Orts des zweiten Richtungswechsels der Kompensationsschleife 11a des äußersten Heizdrahtes 9a befindet. Die Kompensationsschleife 11 c des drittäußersten Heizdrahtes 9c ist in entsprechender Weise oberhalb der Kompensationsschleife 11 b des zweitäußersten Heizdrahtes 9b angeordnet. So setzt sich die Vorgehensweise bei den weiter innen liegenden Heizdrähten 9 fort.

Welche Zusatzlänge ΔL mit den Kompensationsschleifen 11 erreicht wird, wird anhand des drittäußersten Heizdrahtes 9c dargestellt (siehe Fig.2): Der Abstand D der geraden Strecken der Kompensationsschleife 11 c zueinander entspricht dem allgemeinen Abstand D der Heizdrähte 9 zueinander in den Bereichen außerhalb der Kompensationsschleifen 11, in denen sie parallel zueinander verlaufen. Der Richtungswechsel erfolgt jeweils im Wesentlichen in einem Kreisbogen um einen Mittelpunkt M. Die durch die Kompensationsschleife 11c erreichte Zusatzlänge ΔL berechnet sich aus ΔL = 2 x H + π x D, wobei H der in der Vertikalen in Fig. 2 gegebene Abstand zwischen den beiden Mittelpunkten M der Kompensationsschleife 11c ist. Mit der Zusatzlänge ΔL wird die Verkürzung der Wegstrecke des Heizdrahtes 9c aufgrund des weiter innen liegenden Verlaufs gegenüber dem nächstäußeren Heizdraht 9b ausgeglichen.

Die zunehmende Zusatzlänge sowie die abnehmende zur Verfügung stehende Verlegehöhe führen dazu, dass bei den weiter innen liegenden Heizdrähten 9 zwei oder mehr Kompensationsschleifen 11 vorzusehen sind. Der sechstäußerste Heizdraht 9f ist ein Beispiel für einen Heizdraht 9 mit zwei Kompensationsschleifen 11f und 11f'. Der innerste Heizdraht 9q weist im dargestellten Beispiel neun Kompensationsschleifen 11 q auf (siehe Fig. 1).

Bei der in den Figuren 1 und 2 wiedergegebenen Anordnung ist es aufgrund der Kompensationsschleifen 11 erforderlich, die Kontaktsammelschiene 7 mit einer größeren Länge auszubilden, als die Kontaktsammelschiene 6, wobei im gezeigten Beispiel das Verhältnis etwa 3,5 : 1 ist.

Die Heizdrähte 9 können geradlinig oder gewellt abgelegt werden, wobei die Wellenamplituden typischerweise die Größenordnung mm aufweisen. Im Falle in den Figuren nicht dargestellter gewellter Heizdrähte 9 kann die Wellenamplitude von Heizdraht 9 zu Heizdraht 9 oder auch im Verlauf ein und desselben Heizdrahtes 9 variieren, um hierdurch eine zusätzliche Variable zur Einstellung der gewünschten Heizdrahtlänge zu haben. Auch für den äußersten Heizdraht 9a kann eine Welle sinnvoll sein.

Mit einem geeigneten CAD-Programm kann für jede Scheibenform mit Vorgabe von Drahtanzahl, Drahtlängen ggf. einem Bereich für die einstellbaren Wellenamplituden und einem Bereich für den Drahtabstand D eine geeignete Heizfeldgeometrie errechnet werden.

Für die Heizdrähte 9 kann z. B. Wolframdraht mit einer Stärke von lediglich 8 - 17 µm vorgesehen sein, wodurch eine mögliche optische Beeinträchtigung der Glasscheiben hinreichend gering gehalten wird.

### Bezugszeichenliste

- 1.: Fahrzeugseitenscheibe
- 2.: Basiskante
- 3.: vordere Seitenkante
- 4.: obere Kante
- 5.: hintere Seitenkante
- 6.: Kontaktsammelschiene
- 7.: Kontaktsammelschiene
- 8.: Spalt
- 9.: Heizdrähte
- 9a: äußerster Heizdraht
- 9b: zweitäußerster Heizdraht
- 9c: drittäußerster Heizdraht
- 9f: innerer Heizdraht
- 9q: innererster Heizdraht
- 11: Kompensationsschleifen
- 11b: Kompensationsschleife des zweitäußersten Heizdrahts
- 11c: Kompensationsschleife des drittäußersten Heizdrahts
- 11f: Kompensationsschleife
- 11f': Kompensationsschleife
- 11 q: Kompensationsschleifen
- M: Mittelpunkt des Richtungswechsels
- H: Abstand der Mittelpunkte M
- D: Abstand der Heizdrähte zueinander

## Patentansprüche

1. Beheizbare Glasscheibe, umfassend
a) zwei in ihrer Längsrichtung im Wesentlichen parallel zueinander und zu einer Basiskante (2) der beheizbaren Glasscheibe (1) angeordnete Kontaktsammelschienen (6, 7) unterschiedlicher Polarität sowie
b) eine Schar die Kontaktsammelschienen (6, 7) elektrisch kontaktierender Heizdrähte (9),
wobei
c) die Kontaktsammelschienen (6, 7) in ihrer Längsrichtung im Wesentlichen in einer Linie angeordnet sind,
d) die Heizdrähte (9) im Wesentlichen zueinander die gleiche Länge aufweise,
e) die Heizdrähte (9) ohne Kreuzungspunkte zueinander verlegt sind und
f) einer der Heizdrähte (9) als äußerster Heizdraht (9a) die Kontaktsammelschienen (6, 7) an ihren einander abgewandten äußeren Enden kontaktiert.

2. Glasscheibe nach Anspruch 1, **dadurch gekennzeichnet, dass** zumindest jeder innere Heizdraht (9) zum Erreichen gleicher Heizdrahtlängen mit mindestens einer Kompensationsschleife (11) verlegt ist.

3. Glasscheibe nach Anspruch 2, **dadurch gekennzeichnet, dass** die Kompensationsschleifen (11) durch mindestens zwei Richtungswechsel in der Verlegerichtung erzeugt sind, wobei die Heizdrähte (9) nach jedem Richtungswechsel im Wesentlichen entgegengesetzt parallel zur Verlegerichtung vor dem Richtungswechsel verlaufen.

4. Glasscheibe nach Anspruch 3, **dadurch gekennzeichnet, dass** die Heizdrähte zwischen den Richtungswechseln gerade verlaufende Verlegstrecken aufweisen, die im Wesentlichen parallel zu einer an die Basiskante (2) angrenzenden Seitenkante (5) sind.

5. Glasscheibe nach einem der Ansprüche 1 bis 4, **dadurch gekennzeichnet, dass** zumindest ein Teilstück zumindest eines der Heizdrähte (9) gewellt abgelegt ist.

6. Glasscheibe nach Anspruch 5, **dadurch gekennzeichnet, dass** zum Erreichen gleicher Heizdrahtlängen neben der Bildung der mindestens einen Kompensationsschleife (11) unterschiedliche Amplituden der Heizdrahtwellen vorgesehen sind.

7. Glasscheibe nach Anspruch 6, **dadurch gekennzeichnet, dass** zumindest einer der inneren Heizdrähte (9) zumindest in Teilbereichen seiner Wegstrecke eine größere Amplitude der Heizdrahtwelle aufweist als der nächstäußere Heizdraht (9).

8. Glasscheibe nach Anspruch 1 und 5, **dadurch gekennzeichnet, dass** jeder innere Heizdraht (9) zum Erreichen gleicher Heizdrahtlängen zumindest in Teilbereichen seiner Wegstrecke gegenüber dem nächstäußeren Heizdraht (9) eine größere Amplitude der Heizdrahtwelle aufweist.

9. Glasscheibe nach einem der Ansprüche 1 bis 7, **dadurch gekennzeichnet, dass** die heizbare Glasscheibe (1) elektrisch an eine Heizscheibensteuerung angeschlossen ist, die mindestens zwei Heizstufen mit unterschiedlichen Heizleistungen aufweist.

## Claims

1. Heatable glass pane, comprising
a) two contact busbars (6, 7) of different polarity, which are arranged essentially parallel to one another in their longitudinal direction and parallel to a base edge (2) of the heatable glass pane (1), and
b) a set of heating wires (9), which are in electrical contact with the contact busbars (6, 7),
wherein
c) the contact busbars (6, 7) are arranged essentially in a line in their longitudinal direction,
d) the heating wires (9) have essentially the same length as one another,
e) the heating wires (9) are laid without any points of intersection in relation to one another and
f) one of the heating wires (9), as the outermost heating wire (9a), making contact with the contact busbars (6, 7) at their outer ends facing away from one another.

2. Glass pane as claimed in claim 1, **characterized in that** at least each inner heating wire (9) being laid with at least one compensation loop (11) in order to achieve the same heating wire lengths.

3. Glass pane as claimed in claim 2, **characterized in that** the compensation loops (11) are produced by at least two changes in direction of the laying direction, the heating wires (9) after each change in direction extending essentially in the opposite direction and parallel to the laying direction before the change in direction.

4. Glass pane as claimed in claim 3, **characterized in that** the heating wires have straight laid sections between the changes in direction, these sections being essentially parallel to a side edge (5) adjacent to the base edge (2).

5. Glass pane as claimed in one of claims 1 to 4, **characterized in that** at least one partial section of at least one of the heating wires (9) is laid down in undulating fashion.

6. Glass pane as claimed in claim 5, **characterized in that**, in addition to the formation of the at least one compensation loop (11), different amplitudes of the heating wire undulation are provided in order to achieve the same heating wire lengths.

7. Glass pane as claimed in claim 6, **characterized in that** at least one of the inner heating wires (9) has a greater amplitude of the heating wire undulation than the next-outer heating wire (9), at least in subregions of its extent.

8. The glass pane as claimed in claims 1 and 5, **characterized in that** each inner heating wire (9) having a greater amplitude of the heating wire undulation than the next-outer heating wire (9), at least in subregions of its extent, in order to achieve the same heating wire lengths.

9. The glass pane as claimed in one of claims 1 to 8, **characterized in that** the heatable glass pane (1) is electrically connected to a heated pane controller, which has at least two heating stages with different heating powers.

## Revendications

1. Vitre chauffante comprenant
a) deux barres bus de contact (6, 7) de polarités différentes disposées dans leur sens longitudinal pour l'essentiel parallèlement entre elles et à un bord de base (2) de la vitre chauffante (1) et
b) un réseau de fils chauffants (9) qui mettent les barres bus de contact (6, 7) en contact électrique entre elles,
dans laquelle
c) les barres bus de contact (6, 7) dans leur sens longitudinal sont disposées pour l'essentiel sur une ligne,
d) les fils chauffants (9) présentent pour l'essentiel les mêmes longueurs entre eux,
e) les fils chauffants (9) sont posés sans points d'intersection entre eux et
f) l'un des fils chauffants (9) qui fait office de fil chauffant le plus à l'extérieur (9a) établissant le contact entre les extrémités extérieures opposées l'une à l'autre des barres bus de contact (6, 7).

2. Vitre selon la revendication 1, **caractérisée en ce que** au moins chaque fil chauffant intérieur (9) étant posé avec au moins une boucle de compensation (11) afin d'obtenir les mêmes longueurs de fil chauffant.

3. Vitre selon la revendication 2, **caractérisée en ce que** les boucles de compensation (11) sont produites par au moins deux changements de direction dans le sens de la pose, les fils chauffants (9) après chaque changement de direction s'étendant pour l'essentiel parallèlement à l'opposé du sens de la pose avant le changement de direction.

4. Vitre selon la revendication 3, **caractérisée en ce que** les fils chauffants présentent entre les changements de direction des parcours de pose droits qui sont pour l'essentiel parallèles à un bord latéral (5) juxtaposé au bord de base (2).

5. Vitre selon l'une des revendications 1 à 4, **caractérisée en ce qu'**au moins une partie d'au moins l'un des fils chauffants (9) est posée ondulée.

6. Vitre selon la revendication 5, **caractérisée en ce que** pour obtenir des longueurs de fil chauffant égales, des amplitudes différentes des ondulations des fils chauffants sont prévues en plus de l'au moins une boucle de compensation (11).

7. Vitre selon la revendication 6, **caractérisée en ce qu'**au moins l'un des fils chauffants (9) intérieurs présente au moins dans des zones partielles de son parcours une amplitude d'ondulation de fil chauffant supérieure à celle du fil chauffant (9) immédiatement suivant vers l'extérieur.

8. Vitre selon les revendications 1 et 5, **caractérisée en ce que** chaque fil chauffant intérieur (9) présente au moins dans des zones partielles de son parcours une amplitude d'ondulation de fil chauffant supérieure à celle du fil chauffant (9) immédiatement suivant vers l'extérieur afin d'obtenir les mêmes longueurs de fil chauffant.

9. Vitre selon l'une des revendications 1 à 8, **caractérisée en ce que** la vitre chauffante (1) est reliée électriquement à une commande de vitre chauffante qui présente au moins deux niveaux de chauffage aux puissances de chauffage différentes.
